# EUROPEAN PATENT APPLICATION

(11) **EP 3 855 845 A1**
(43) Date of publication of application: **28.07.2021**
(21) Application number: 21163681.6
(22) Date of filing: 10.08.2017
(51) Int. Cl.: H04W 72/08, H04J 3/00, H04W 16/14, H04W 74/08, H04L 5/00

(54) **CHANNEL ACCESS METHOD AND MOBILE STATION**

(30) Priority: 11.08.2016 CN 201610659873
(62) Divisional of application: 17839603.2
(71) Applicant: NTT DOCOMO, INC., Chiyoda-ku Tokyo 100-6150 (JP)
(72) Inventor: Harada, Hiroki, Tokyo, 100-6150 (JP); Wang, Jing, Beijing, 100190 (CN); Liu, Liu, Beijing, 100190 (CN); Jiang, Huiling, Beijing, 100190 (CN)
(74) Representative: Hoffmann Eitle

(57) **Abstract**

The present invention provides a channel access method in a mobile station, and this method includes listening to the channel in a first subframe, which is one of a plurality of uplink subframes, based on a predetermined first listening type, and, when uplink transmission succeeds in the first subframe, listening to the channel, in a second subframe that is present within the maximum channel occupancy time from the first subframe and that follows the first subframe, based on a second listening type, wherein access to the channel is less difficult than the first listening type.

## Description

### Technical Field

The present invention relates to a channel access method and a mobile station. To be more specific, the present invention relates to a channel access method based on a mechanism called "listen before talk," and a mobile station.

### Background Art

Envisaging future radio communication systems such as LTE-advanced (LTE-A (Long Term Evolution-Advanced)) following LTE, research is in progress to further improve the throughput of mobile communication systems using license-assisted access (LAA) technology. In cells where license-assisted access technology is used, the base stations and users can communicate using unlicensed bands that are used for other systems such as Wi-Fi systems, in addition to licensed bands.

### Summary of Invention

### Technical Problem

When licensed-assisted access technology is in use, an unlicensed band is used and shared by radio communication systems and other systems such as Wi-Fi systems, and therefore a base station and/or a mobile station have to listen to the unlicensed band before transmitting data to make sure that the unlicensed band is available for use. To be more specific, a base station indicates, to a mobile station, a listening category, based on which the mobile station should listen to the channel, and the mobile station listens to the channel based on the indicated category.

### Solution to Problem

One aspect of the present invention provides a channel access method that is executed by a mobile station, and this channel access method includes a first step of listening to a channel in a first subframe, which is one of a plurality of uplink subframes, based on a predetermined first listening type, in a state of that listening types are designated for a mobile station for the plurality of uplink subframes, and a second step of listening to the channel, when uplink transmission succeeds in the first subframe, in a second subframe that is present within a maximum channel occupancy time from the first subframe and that follows the first subframe, based on a second listening type, wherein access to the channel is less difficult than the first listening type.

### Advantageous Effects of Invention

According to the technical concept underlying the above-described aspect of the present invention, it is possible to effectively improve the efficiency of channel access, and so that radio communication systems can communicate by using unlicensed bands effectively.

### Brief Description of Drawings

Now, embodiment of the present invention will be described below in detail with reference to the accompanying drawings, so that the above and other objects, features and advantages of the present invention will become clear.
FIG. 1 is a diagram to explain an example of communication using an unlicensed band in a communication system according to an embodiment of the present invention;
FIG. 2 is a flowchart to show a channel access method that is executed by a mobile station according to one embodiment of the present invention;
FIG. 3 is a diagram to explain another example of communication using an unlicensed band in a communication system according to an embodiment of the present invention;
FIG. 4 is a flowchart to show a channel access method that is executed by a base station according to another embodiment of the present invention;
FIG. 5 is a diagram to explain another example of communication using an unlicensed band in a communication system according to an embodiment of the present invention;
FIG. 6 is a block diagram to show a mobile station according to an embodiment of the present invention; and
FIG. 7 is a block diagram to show a base station according to another embodiment of the present invention.

### Description of Embodiments

Hereinafter, channel access methods, base stations and mobile stations in accordance with embodiments of the present invention will be described below with reference to the accompanying drawings. In the accompanying drawings, the same reference numerals indicate the same elements throughout. Note that the embodiments herein will only illustrate examples, and should not be construed to limit the scope of the present invention. Note that, although the UEs described herein will refer to various categories of user terminals, including, for example, mobile terminals (or referred to as "mobile stations") and stationary terminals, in the following description, "UEs" and "mobile stations" will be used interchangeably for ease of explanation.

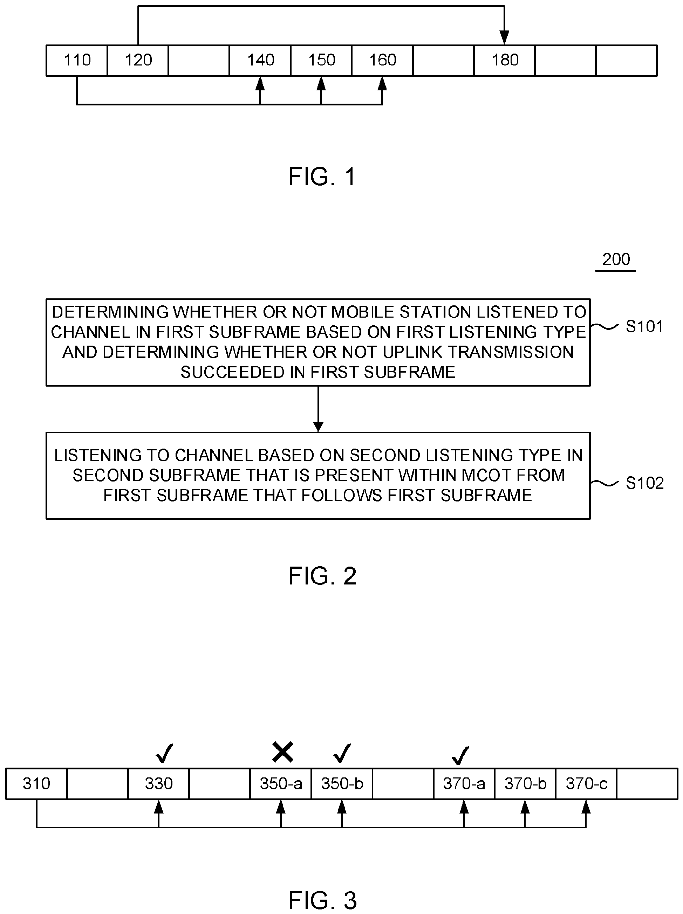

The technical concept that underlies embodiments of the present invention makes use of a communication system based on LAA technology, so that, in this communication system, communication can be carried out using unlicensed bands. First, with reference to FIG. 1, an overview of how communication is carried out using an unlicensed band in a communication system according to an embodiment of the present invention will be described below. FIG. 1 is a diagram to explain an example of communication using an unlicensed band in a communication system according to an embodiment of the present invention.

In the example shown in FIG. 1, when a base station desires to perform downlink transmission using an unlicensed band, the base station listens to the channel in the unlicensed band. If the result of listening in one subframe indicates that the channel is accessible, the base station performs downlink transmission in this subframe. Hereinafter, a subframe in which the base station listens to the channel and performs downlink transmission will be referred to as a "downlink subframe." As shown in FIG. 1, in a subframe 110, the base station listens to the channel and performs downlink transmission. For example, in a downlink subframe, the base station transmits control signaling, including scheduling information, to a mobile station, so that the mobile station will listen to the channel for the unlicensed band based on the scheduling information, and determine whether or not the mobile station can access the channel and perform uplink transmission based on the result of listening. Similarly, in a subframe 120, too, the base station listens to the channel and performs downlink transmission.

The scheduling information includes information about subframes in which the mobile station can listen to the channel and try uplink transmission. Hereinafter, a subframe which is specified by the base station and in which the mobile station can listen to the channel and try uplink transmission will be referred to as an "uplink subframe." The base station can schedule multiple uplink subframes with scheduling information in one downlink subframe. Based on scheduling information transmitted from the base station, the mobile station can identify subframes for listening to the channel. As shown in FIG. 1, the scheduling information which the base station transmits in the subframe 110 specifies that the mobile station should listen to the channel and try uplink transmission in subframes 140, 150 and 160. The scheduling information which the base station transmits in the subframe 120 specifies that the mobile station should listen to the channel to try uplink transmission in a subframe 180.

Note that the scheduling information may further include information about the listening type which the mobile station uses when listening to the channel in each uplink subframe. In LAA systems, various listening types may be present. To be more specific, in an LAA system, four categories of channel listening types -- that is, category 1 to category 4 may be present. Depending on each channel listening type, the difficulty in gaining access to the channel varies. For example, in category 1, communication apparatus (for example, a base station or a mobile station) does not need to listen to the channel. In category 2, communication apparatus needs to listen to the channel for a certain period of time (for example, 25 µs), and does not have to backoff randomly. In category 3, communication apparatus needs to listen to the channel based on a random backoff algorithm with a fixed contention window size. In category 4, communication apparatus needs to listen to the channel based on a random backoff algorithm in which the contention window size is variable.

Under the circumstance where the base station cannot identify the result of channel listening by the mobile station in each subframe, generally, the base station commands the mobile station to listen to the channel based on a more difficult access scheme, in each uplink subframe, in order to maintain the fairness of operation in the unlicensed band. That is, the mobile station is commanded to listen to the channel based on a channel access scheme that is similar to Wi-Fi. For example, the base station commands the mobile station to listen to the channel according to category 4, in each uplink subframe. By this means, in each subframe where the mobile station is expected to perform uplink transmission, the channel can be accessed after the more-complicated channel listening process is finished.

Embodiments of the present invention provide improved channel access methods. Now, embodiments of the present invention will be described below with reference to the accompanying drawings. FIG. 2 is a flowchart to show a channel access method 200 that is performed by a mobile station according to one embodiment of the present invention. As shown in FIG. 2, in step S201, whether or not the mobile station has listened to the channel based on the first listening type in the first subframe is judged, and whether or not the mobile station has succeeded in performing uplink transmission in the first subframe is judged. According to one example of the present invention, the first subframe is one of uplink subframes which are specified by the base station and in which the mobile station can listen to the channel and try uplink transmission. Note that, with the first listening type, it may be more difficult to gain channel access. For example, the first listening type may be a listening type of category 4.

When the mobile station listens to the channel in the first subframe based on the first listening type and succeeds in performing uplink transmission in the first subframe, in step S202, the mobile station listens to the channel according to a second listening type, in a second subframe, which follows the first subframe, and which is located within the maximum channel occupancy time (MCOT) from the first subframe. Here, the maximum channel occupancy time refers to a predetermined number of subframes which the mobile station is allowed to occupy in the channel. According to an example of the present invention, the second subframe is another subframe among the uplink subframes which are specified by the base station and in which the mobile station can listen to the channel and try uplink transmission, and the second subframe is located after the first subframe. Note that the difficulty of channel access based on the second listening type is lower than the difficulty of channel access based on the first listening type. For example, if the first listening type is a listening type of category 4, the second listening type is a listening type of category 1 or category 2.

As mentioned above, in order to maintain the fairness of operation in an unlicensed band under the circumstance where the base station cannot identify the result of channel listening by the mobile station in each subframe, the base station generally commands the mobile station to listen to the channel based on a channel access type, wherein channel access is more difficult, in each uplink subframe. To be more specific, the method shown in FIG. 2 may further include receiving first scheduling information, which commands the mobile station to listen to the channel in the second subframe based on the first listening type. According to one example of the present invention, when the mobile station listens to the channel in the first subframe based on the first listening type and succeeds in performing uplink transmission in the first subframe, even if the first scheduling information is received, in the second subframe, the mobile station listens to the channel based on the second listening type. That is, the mobile station adjusts the channel listening type in the second subframe after the first subframe depending on the situation of the mobile station in terms of channel access in the first subframe.

Note that MCOTs that can be allowed in various listening types may be stored in the mobile station in advance. Alternatively, the base station may transmit information about MCOTs that are based on various listening types or other configurations, to the mobile station. As mentioned above, the MCOT refers to the period or a predetermined number of subframes which the mobile station is allowed to occupy in the channel. The maximum channel occupancy time may be comprised of one subframe or multiple subframes, depending on the specifics of the situation in which the channel is used.

Note that the method shown in FIG. 2 may further include determining whether or not the second subframe is within the maximum channel occupancy time from the first subframe. According to one example of the present invention, a predetermined number of subframes to constitute the MCOT may be continuous. In this case, whether or not the second subframe is within the maximum channel occupancy time from the first subframe can be determined based on the predetermined number and the number of subframes between the first subframe and the second subframe. For example, if the number of subframes between the first subframe and the second subframe (the first subframe and the second subframe may be included) is less than or equal to the predetermined number, it can be determined that the second subframe is within the maximum channel occupancy time from the first subframe.

In the example shown in FIG. 1, the MCOT for the mobile station is three subframes. In the event the three subframes that constitute the MCOT are continuous, when the mobile station successfully performs uplink transmission by listening to the channel in the subframe 140 based on the first listening type, the mobile station determines, in the subframe 150, that the number of subframes between the subframe 150 and the subframe 140 is less than three -- that is, the subframe 150 is within the maximum channel occupancy time from the subframe 140. Likewise, the mobile station can determine that the subframe 160 is within the maximum channel occupancy time from the subframe 140. Therefore, in step S202, even when the scheduling information transmitted by the base station in the subframe 110 indicates to the mobile station that the channel listening type in the subframes 150 and 160 is the first channel listening type, the mobile station may listen to the channel based on the second listening type, whereby gaining channel access is less difficult.

Note that the mobile station can determine that the number of subframes between a subframe 180 and the subframe 140 exceeds the maximum channel occupancy time from the subframe 140. Therefore, in the subframe 180, the mobile station listens to the channel based on the channel listening type for the mobile station in the subframe, specified by the scheduling information transmitted by the base station in the subframe 120, and does not adjust the channel listening type in step S202.

According to another example of the present invention, a predetermined number of subframes that constitute the MCOT equals the number of subframes in which a mobile station is scheduled, and in which the mobile station listens to the channel, and the predetermined number of subframes may be continuous or discontinuous. In this case, it is possible to determine whether or not the current subframe is within the maximum channel occupancy time from the first subframe based on the predetermined number and the number of subframes in which the mobile station is scheduled between the first subframe and the second subframe, and in which the mobile station listens to the channel. For example, when the number of subframes in which the mobile station is scheduled between the first subframe and the second subframe, and in which the mobile station listens to the channel (the first subframe and the second subframe may be included) is equal to or less than the predetermined number, the second subframe can be determined to be within the maximum channel occupancy time from the first subframe.

Referring to the example shown in FIG. 1, it is assumed that the three subframes included in the MCOT are discontinuous. When the mobile station listens to the channel based on the first listening type in the subframe 140 but cannot perform uplink transmission due to the result of listening, and, by contrast with this, the mobile station listens to the channel based on the first listening type in the subframe 150 and performs uplink transmission successfully, in the subframe 160 and the subframe 180, the mobile station determines that the number of subframes, in which the mobile station is scheduled between the subframe 150 and the subframe 180, and in which the mobile station has listened to the channel is three (the subframe 150, the subframe 160 and the subframe 180 may be included) and is the same as the predetermined number -- that is, the mobile station determines that the subframe 160 and the subframe 180 are within the maximum channel occupancy time from the subframe 150. In step S202, even when the scheduling information transmitted by the base station in subframe 120 indicates to the mobile station that the channel listening type in the subframe 160 and the subframe 180 is the first channel listening type, the mobile station may listen to the channel based on the second listening type, whereby gaining channel access is less difficult.

There are cases where the result of listening shows that the channel is busy and not accessible. According to another example of the present invention, a predetermined number of subframes included in the MCOT equals the number of subframes in which a mobile station is scheduled, and in which the mobile station listens to the channel and performs uplink transmission successfully, and the predetermined number of subframes may be continuous or discontinuous. In this case, whether or not the current subframe is within the maximum channel occupancy time from the first subframe is determined, based on the predetermined number and the number of subframes in which the mobile station is scheduled between the first subframe and the second subframe, and in which the mobile station listens to the channel and performs uplink transmission successfully. For example, when the number of subframes, in which the mobile station is scheduled between the first subframe and the second subframe, and in which the mobile station listens to the channel and succeeds in performing uplink transmission (the first subframe and the second subframe may be included) is less than or equal to the predetermined number, it is possible to determine that the second subframe is within the maximum channel occupancy time from the first subframe.

FIG. 3 is a diagram to explain another example of communication using an unlicensed band in a communication system according to an embodiment of the present invention. As shown in FIG. 3, in a subframe 310, a base station listens to the channel and performs downlink transmission. For example, in a downlink subframe, the base station transmits control signaling, which includes scheduling information, to a mobile station, so as to determine whether or not the mobile station can listen to the channel in the unlicensed band based on the scheduling information, and access the channel and perform uplink transmission based on the result of listening. Based on the scheduling information transmitted by the base station in the subframe 310, the mobile station listens to the channel and tries uplink transmission in subframes 330, 350-a, 350-b and 370-a to 370-c.

In the example shown in FIG. 3, the MCOT when the mobile station accesses the channel from the subframe 330 based on the first listening type is comprised of four subframes. The mobile station listens to the channel based on the first listening type in the subframe 330. Assume that the mobile station listens to the channel and performs uplink transmission successfully in the subframe 330, listens to the channel but cannot access the channel or perform uplink transmission successfully in the subframe 350-a, and listens to the channel and performs uplink transmission successfully in the subframes 350-b and 370-a. In the subframe 370-b, the mobile station determines that the number of subframes (the subframes 330, 350-b and 370-a may be included), in which the mobile station is scheduled between the subframe 330 and the subframe 370-b, and in which the mobile station listens to the channel and performs uplink transmission successfully is three and less than the number of subframes included in the MCOT -- that is, the mobile station determines that the subframe 370-b is within the maximum channel occupancy time from the subframe 330. In step S202, even when the scheduling information transmitted by the base station in the subframe 310 indicates to the mobile station that the channel listening type in the subframe 370-b is the first channel listening type, the mobile station listens to the channel based on the second listening type, whereby gaining channel access is less difficult.

With the channel access method according to an embodiment of the present invention that has been described above with reference to FIG. 1 to FIG. 3, when a mobile station listens to the channel based on the first listening type and performs uplink transmission successfully in the first subframe, in subframes that follow the first subframe and that are present within the maximum channel occupancy time for the mobile station from the first subframe, the mobile station can listen to the channel and try channel access based on channel listening types wherein channel access is less difficult. This reduces the difficulty of channel access and increases the chances to access the channel.

Note that, in certain cases, the base station may command the mobile station to listen to the channel based on a listening type wherein channel access is less difficult. However, given that the base station cannot identify the actual situation of the mobile station in terms of channel access, subframes which the base station designates for listening to the channel based on channel listening types whereby gaining channel access is less difficult may be inadequate subframes. Preferably, the mobile station may further adjust the channel listening type depending on whether or not the subframe to listen to the channel and try channel access exceeds the maximum channel occupancy time from the first subframe.

According to one example of the present invention, the method shown in FIG. 1 may further include the steps of receiving second scheduling information, and, when the second scheduling information commands a mobile station to listen to the channel based on a second listening type in a third subframe that comes immediately after the maximum channel occupancy time from the first subframe, listening to the channel in the third subframe based on the first listening type. That is, in the event there is a third subframe immediately after the maximum channel occupancy time from the first subframe, not within the range of the maximum channel occupancy time from the first subframe, even if second scheduling information commands listening to the channel in the third subframe based on a second listening type whereby gaining channel access is less difficult, the mobile station listens to the channel in the third subframe based on the first listening type.

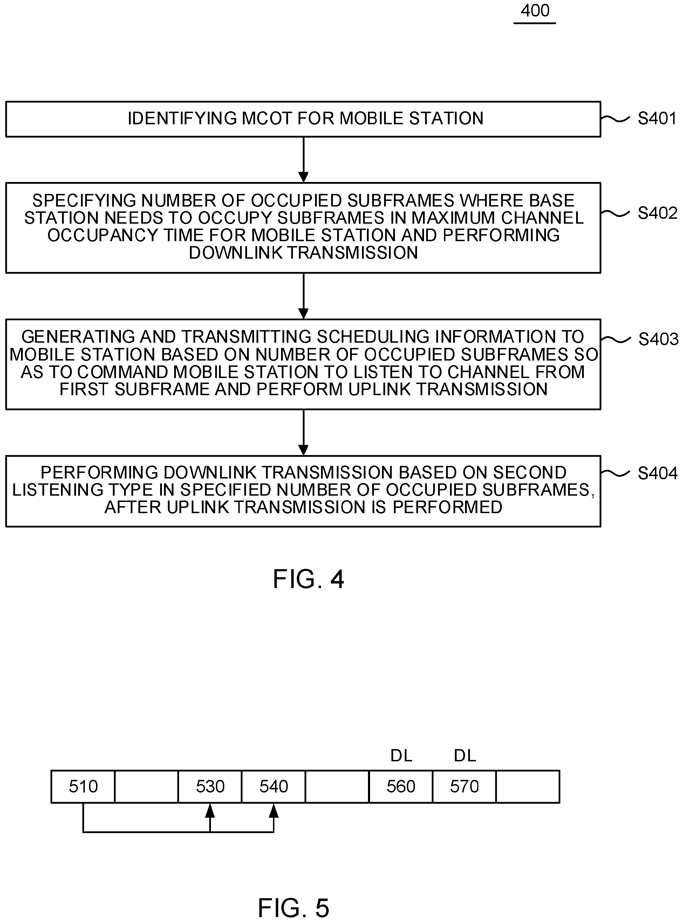

With the channel access method according to the embodiment of the present invention that has been described above with reference to FIG. 1 to FIG. 3, the complexity of channel access by the mobile station is reduced. Another aspect of the present invention provides a channel access method whereby a base station gains channel access more efficiently. FIG. 4 is a flowchart to show a channel access method that is executed by a base station according to another embodiment of the present invention.

As shown in FIG. 4, in step S401, the maximum channel occupancy time for a mobile station from the first subframe is identified, where this maximum channel occupancy time is a predetermined number of subframes which the mobile station is allowed to occupy in the channel, and, in the first subframe, the mobile station performs uplink transmission based on the first listening type. Subframes that are included in the maximum channel occupancy time have been described earlier in detail, so that their explanation will be omitted here.

In step S402, the number of occupied subframes, where the base station needs to occupy subframes in the maximum channel occupancy time for the mobile station and perform downlink transmission, is specified. Next, in step S403, the base station generates scheduling information for the mobile station based on the number of occupied subframes and transmits this to the mobile station, commanding the mobile station to listen to the channel from the first subframe and perform uplink transmission. For example, the scheduling information may include information about uplink subframes, and the number of uplink subframes specified by the scheduling information may be less than or equal to the number of subframes included in the maximum channel occupancy time for the mobile station minus the number of occupied subframes.

Therefore, within the maximum channel occupancy time from the first subframe, the base station performs downlink transmission using a number of subframes to match the number of occupied subframes. When the base station performs downlink transmission within the maximum channel occupancy time from the first subframe, the base station may listen to the channel based on a listening type wherein channel access is less difficult. To be more specific, in step S404,the base station performs downlink transmission based on the second listening type in a number of subframes to match the number of occupied subframes specified after the mobile station has performed uplink transmission according to the scheduling information, and the mobile station performs uplink transmission based on the first listening type in the first subframe, where the difficulty of gaining channel access based on the second listening type is lower than the difficulty of gaining channel access based on the first listening type.

In the present embodiment, a number of subframes to match the number of occupied subframes specified after the mobile station has performed uplink transmission according to the scheduling information refer to, for example, subframes which follow after a subframe in which the mobile station performs uplink transmission according to the scheduling information, and in which the base station listens to the channel. A subframe in which the mobile station performs uplink transmission according to the scheduling information and a subframe which is located after the subframe the mobile station performs uplink transmission according to the scheduling information and in which the base station listens to the channel may be continuous subframes or discontinuous subframes.

FIG. 5 is a diagram to explain another example in which communication can be performed using an unlicensed band in a communication system according to an embodiment of the present invention. In the example shown in FIG. 5, the MCOT for a mobile station is comprised of four subframes. In step S402, the base station determines that two subframes needs to be occupied. Next, in step S403, the base station generates scheduling information based on the number of subframes included in the MCOT and the number of subframes the base station needs to occupy, and in subframe 510, transmits the scheduling information to the mobile station, commanding the mobile station to listen to the channel and perform uplink transmission in subframe 530 and subframe 540. After the mobile station listens to the channel and performs uplink transmission in the subframe 530 and the subframe 540 based on the scheduling information transmitted in subframe 510, the base station performs downlink transmission in the subframe 560 and the subframe 570 based on the number of occupied subframes. The subframe 560 and the subframe 570 are within the MCOT for the mobile station from the subframe 530, so that, in the subframe 560 and the subframe 570, the base station may listen to the channel based on the second listening type, whereby gaining channel access is less difficult.

Note that, preferably, in the occupied subframes, the base station may transmit only information related to mobile stations for which the maximum channel occupancy time is occupied, and may not transmit information related to other mobile stations.

With the channel access method according to the embodiment of the present invention that has been described above with reference to FIG. 4, the base station performs downlink transmission using time that constitutes the MCOT for the mobile station. In this case, the base station may listen to the channel based on the second listening type, with which it is less difficult to gain channel access, so that the difficulty of channel access by the base station is reduced.

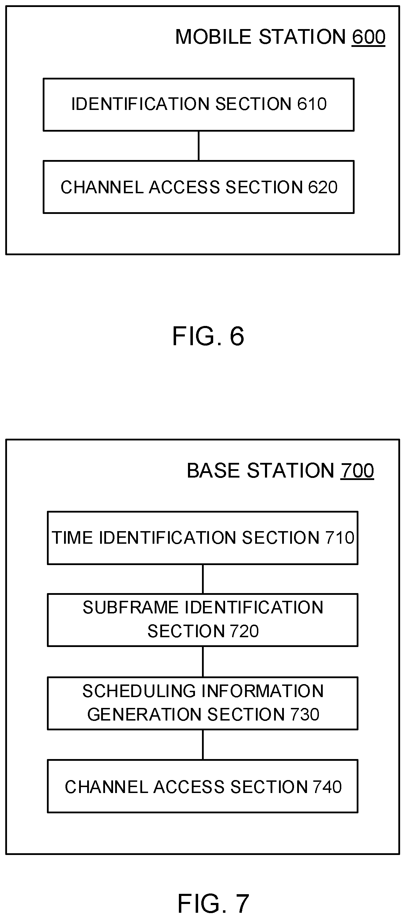

A mobile station according to an embodiment of the present invention will be described below with reference to FIG. 6. FIG. 6 is a block diagram to show a mobile station 600 according to an embodiment of the present invention. As shown in FIG. 6, the mobile station 600 includes an identification section 610 and a channel access section 620. Although, in addition to these two components, the mobile station 600 may further include other components such as components that perform various processes on data signals or control signals, these components are not related to the contents of the embodiment of the present invention, and therefore will not be illustrated or described here. Note that since the specifics of the following operations performed by a mobile station 600 according to an embodiment of the present invention are the same as the details that have been explained in the above description with reference to FIG. 1 to FIG. 3, to avoid overlapping explanations, the same details will not be explained again here.

The identification section 610 determines whether or not the mobile station has listened to the channel in the first subframe based on the first listening type, and determines whether or not the mobile station has succeeded in performing uplink transmission in the first subframe. According to one example of the present invention, the first subframe is one of uplink subframes which are specified by the base station and in which the mobile station can listen to the channel and try uplink transmission. Note that, it may be more difficult to gain channel access with the first listening type. For example, the first listening type may be a listening type of category 4.

When the mobile station listens to the channel in the first subframe based on the first listening type and succeeds in performing uplink transmission in the first subframe, the channel access section 620 listens to the channel based on a second listening type, in a second subframe, which follows the first subframe, and which is located within the MCOT from the first subframe. Here, the maximum channel occupancy time refers to a predetermined number of subframes which the mobile station is allowed to occupy in the channel. According to an example of the present invention, the second subframe is another subframe among the uplink subframes which are specified by the base station and in which the mobile station can listen to the channel and try uplink transmission, and the second subframe is located after the first subframe. Note that the difficulty of gaining channel access based on the second listening type is lower than the difficulty of gaining channel access based on the first listening type. For example, if the first listening type is a listening type of category 4, the second listening type may be a listening type of category 1 or category 2.

As mentioned above, in order to maintain the fairness of operation in an unlicensed band under the circumstance where the base station cannot identify the result of channel listening by the mobile station in each subframe, the base station generally commands the mobile station to listen to the channel based on a channel access scheme, whereby gaining channel is more difficult, in each uplink subframe. To be more specific, the mobile station shown in FIG. 6 may further include a receiving section for receiving first scheduling information, which commands the mobile station to listen to the channel in the second subframe based on the first listening type. According to one example of the present invention, when the mobile station listens to the channel in the first subframe based on the first listening type and succeeds in performing uplink transmission in the first subframe, even if the first scheduling information is received, the channel access section 620 listens to the channel based on the second listening type in the second subframe. That is, the mobile station may adjust the channel listening type in the second subframe after the first subframe depending on the situation of the mobile station in terms of channel access in the first subframe.

Note that MCOTs that can be allowed in various listening types may be stored in the mobile station in advance. Alternatively, the base station may send information about MCOTs that are based on various listening types or other configurations to the mobile station. As mentioned above, the MCOT refers to a predetermined number of subframes which the mobile station is allowed to occupy in the channel. The maximum channel occupancy time may be comprised of one subframe or multiple subframes, depending on the specifics of the situation in which the channel is used.

Note that the mobile station shown in FIG. 6 may further include a subframe identification section that determines whether or not the second subframe is within the maximum channel occupancy time from the first subframe. According to one example of the present invention, a predetermined number of subframes to constitute the MCOT may be continuous. In this case, the subframe identification section can determine whether or not the second subframe is within the maximum channel occupancy time from the first subframe based on the predetermined number and the number of subframes between the first subframe and the second subframe. For example, if the number of subframes between the first subframe and the second subframe (the first subframe and the second subframe may be included) is less than or equal to the predetermined number, the subframe identification section determines that the second subframe is within the maximum channel occupancy time from the first subframe.

According to another example of the present invention, a predetermined number of subframes that constitute the MCOT equals the number of subframes in which a mobile station is scheduled, and in which the mobile station listens to the channel, and the predetermined number of subframes may be continuous or discontinuous. In this case, it is possible to determine whether or not the current subframe is within the maximum channel occupancy time from the first subframe based on the predetermined number and the number of subframes in which the mobile station is scheduled between the first subframe and the second subframe, and in which the mobile station listens to the channel. For example, when the number of subframes in which the mobile station is scheduled between the first subframe and the second subframe, and in which the mobile station listens to the channel (the first subframe and the second subframe may be included) is equal to or less than the predetermined number, the subframe identification section can determine that the second subframe is within the maximum channel occupancy time from the first subframe.

There are cases where the result of listening shows that the channel is busy and not accessible. According to another example of the present invention, a predetermined number of subframes included in the MCOT equals the number of subframes in which a mobile station is scheduled, and in which the mobile station listens to the channel and performs uplink transmission successfully, and the predetermined number of subframes may be continuous or discontinuous. In this case, the subframe identification section can determine whether or not the current subframe is within the maximum channel occupancy time from the first subframe based on the predetermined number and the number of subframes in which the mobile station is scheduled between the first subframe and the second subframe, and in which the mobile station listens to the channel and performs uplink transmission successfully. For example, when the number of subframes, in which the mobile station is scheduled between the first subframe and the second subframe, and in which the mobile station listens to the channel and succeeds in performing uplink transmission (the first subframe and the second subframe may be included) is less than or equal to the predetermined number, the subframe identification section can determine that the second subframe is within the maximum channel occupancy time from the first subframe.

According to the mobile station of the embodiment of the present invention that has been described above with reference to FIG. 6, when the mobile station listens to the channel based on the first listening type and performs uplink transmission successfully in the first subframe, in subframes that follow the first subframe and that are present within the maximum channel occupancy time for the mobile station from the first subframe, the mobile station can listen to the channel and try channel access based on channel listening types whereby gaining channel access is less difficult. Therefore, the difficulty of accessing the channel is alleviated.

Note that, in certain cases, the base station may command the mobile station to listen to the channel based on a listening type whereby gaining channel access is less difficult. However, given the base station cannot identify the actual situation of the mobile station in terms of channel access, subframes which the base station designates for listening to the channel based on channel listening types whereby gaining channel access is less difficult may be inadequate subframes. Preferably, the mobile station may further adjust the channel listening type depending on whether or not the subframe to listen to the channel and try channel access exceeds the maximum channel occupancy time from the first subframe.

According to one example of the present invention, when second scheduling information additionally commands the mobile station to listen to the channel based on a second listening type in a third subframe that comes immediately after the maximum channel occupancy time from the first subframe, the channel access section 620 in the mobile station shown in FIG. 6 may listen to the channel based on the first listening type in the third subframe. That is, in the event there is a third subframe immediately after the maximum channel occupancy time from the first subframe, not within the range of the maximum channel occupancy time from the first subframe, even if second scheduling information commands listening to the channel in the third subframe based on a second listening type whereby gaining channel access is less difficult, the channel access section 620 listens to the channel in the third subframe based on the first listening type.

With the embodiment described above with reference to FIG. 6, the difficulty that a mobile station has gaining channel access is reduced. Another of the present invention provides a channel access method whereby a base station gains channel access more efficiently. FIG. 7 is a block diagram to show a base station 700 according to another embodiment of the present invention. As shown in FIG. 7, the base station 700 includes a time identification section 710, a subframe identification section 720, a scheduling information generation section 730 and a channel access section 740. In addition to these four components, the base station 700 may further include other components that perform various processes on data signals or control signals, these components are not related to the contents of the embodiment of the present invention, and therefore will not be illustrated or described here. Note that since the specifics of the following operations performed by a base station 700 according to an embodiment of the present invention are the same as the details that have been explained in the above description with reference to FIG. 4, to avoid overlapping explanations, the same details will not be explained again here.

The time identification section 710 identifies the maximum channel occupancy time for a mobile station from the first subframe, and where this maximum channel occupancy time is a predetermined number of subframes which the mobile station is allowed to occupy in the channel, and, in the first subframe, the mobile station performs uplink transmission based on the first listening type. Subframes that are included in the maximum channel occupancy time have been described earlier in detail, so that their explanation will be omitted here. The subframe identification section 720 specifies the number of occupied subframes, where the base station needs to occupy subframes in the maximum channel occupancy time for the mobile station and perform downlink transmission. Then, the scheduling information generation section 730 generates scheduling information for the mobile station based on the number of occupied subframes and transmits this to the mobile station, commanding the mobile station to listen to the channel from the first subframe and perform uplink transmission. For example, the scheduling information may include information about uplink subframes, and the number of uplink subframes specified by the scheduling information may be less than or equal to the number of subframes included in the maximum channel occupancy time for the mobile station minus the number of occupied subframes.

Therefore, within the maximum channel occupancy time from the first subframe, the base station performs downlink transmission using a number of subframes to match the number of occupied subframes. Also, when the base station performs downlink transmission within the maximum channel occupancy time from the first subframe, the base station may listen to the channel based on a listening type whereby gaining channel access is less difficult. To be more specific, the channel access section 740 performs downlink transmission based on the second listening type in a number of subframes to match the number of occupied subframes specified after the mobile station has performed uplink transmission according to the scheduling information, and the mobile station performs uplink transmission based on the first listening type in the first subframe, where the difficulty of gaining channel access based on the second listening type is lower than the difficulty of gaining channel access based on the first listening type.

In this example, a number of subframes to match the number of occupied subframes specified after the mobile station has performed uplink transmission according to the scheduling information refer to, for example, subframes which follow after a subframe in which the mobile station performs uplink transmission according to the scheduling information, and in which the base station listens to the channel. A subframe in which the mobile station performs uplink transmission according to the scheduling information and a subframe which is located after the subframe the mobile station performs uplink transmission according to the scheduling information and in which the base station listens to the channel may be continuous subframes or discontinuous subframes.

Note that, preferably, in the occupied subframes, the base station may transmit only information related to mobile stations for which the maximum channel occupancy time is occupied, and may not transmit information related to other mobile stations.

With the channel access method according to the embodiment of the present invention that has been described above with reference to FIG. 7, the base station may perform downlink transmission using time that constitutes the MCOT for the mobile station. Note that, when downlink transmission is performed using time in the MCOT for the mobile station, the base station may preferably listen to the channel based on the second listening type, with which it is less difficult to gain channel access, and so that the complexity of channel access by the base station is reduced.

The operations of the above-described mobile station 600 and base station 700 may be implemented with hardware, may be implemented with software modules that are executed on a processor, or may be implemented with combinations of both. For example, the identification section and the subframe identification section in the mobile station, and the time identification section, the subframe identification section and the scheduling information generation section in the base station may be implemented in software modules executed on a processor. The software modules may be stored in any form of storage medium, such as, for example, a RAM (Random Access Memory), a flash memory, a ROM (Read Only Memory), an EPROM (Erasable Programmable ROM), an EEPROM (Electrically Erasable Programmable ROM), a register, a hard disk, a removable disk and a CD-ROM.

Such a storage medium may be connected to a processor, so that the processor can write information into or read information from the storage medium. This storage medium may be stacked in the processor. These storage medium and processor may be arranged in an ASIC (Application Specific Integrated Circuit). This ASIC may be arranged in the mobile station 600 and the base station 700. These storage medium and processor may be located in the mobile station 600 and the base station 700 as independent units.

Now, the present invention has been described in detail with reference to the above embodiments. However, it should be understood by those skilled in the art that the present invention is not limited to the embodiments described herein. The present invention may be implemented in examples modified or changed under the circumstances such modifications and changes do not depart from the scope of the present invention defined by claims. Accordingly, the description in this specification is only intended to be interpreted as an illustration and does not add any restrictive meaning to the present invention.

Further embodiments are defined as E1 to E4, as follows:
E1. A channel access method that is executed by a mobile station, comprising:
   a first step of listening to a channel in a first subframe, which is one of a plurality of uplink subframes, based on a predetermined first listening type, in state of that listening types are designated for the mobile station for the plurality of uplink subframes, and
   a second step of listening to the channel, when uplink transmission succeeds in the first subframe, in a second subframe that is present within a maximum channel occupancy time from the first subframe and that follows the first subframe, based on a second listening type, wherein access to the channel is less difficult than the first listening type.
E2. The channel access method according to embodiment 1, further comprising a step of receiving scheduling information that indicates that the first listening type be applied as the listening type for the second subframe,
   wherein content of the second listening type is not to listen to the channel.
E3. The channel access method according to embodiment 1, further comprising a step of judging, during the second step, whether the second subframe is present within the maximum channel occupancy time.
E4. A mobile station that performs uplink channel access comprising:
   a receiving section that receives scheduling information, which includes a listening type to apply to an uplink subframe; and
   a channel access section that listens to a channel in a first subframe, which is one of a plurality of uplink subframes, based on a predetermined first listening type, in a state of that listening types are designated for the plurality of uplink subframes,
   wherein, when uplink transmission succeeds in the first subframe, the channel access section listens to the channel, in a second subframe that is present within a maximum channel occupancy time from the first subframe and that follows the first subframe, based on a second listening type, wherein access to the channel is less difficult than the first listening type.

## Claims

1. A base station comprising:
a receiving section configured to receive an uplink signal in a channel occupancy time initiated by a terminal performing channel listening based on a first listening type of channel listening with a random backoff; and
a control section configured to, when transmitting a downlink signal in the channel occupancy time, perform the channel listening based on a second listening type of channel listening without the random backoff.

2. A terminal comprising:
a transmitting section configured to transmit an uplink signal in a channel occupancy time initiated by performing channel listening based on a first listening type of channel listening with a random backoff; and
a receiving section configured to receive, in the channel occupancy time, a downlink signal which is transmitted from a base station by performing channel listening based on a second listening type of channel listening without the random backoff.

3. A radio communication method for a base station, comprising:
receiving an uplink signal in a channel occupancy time initiated by a terminal performing channel listening based on a first listening type of channel listening with a random backoff; and
when transmitting a downlink signal in the channel occupancy time, performing the channel listening based on a second listening type of channel listening without the random backoff.
